# EUROPEAN PATENT SPECIFICATION

(11) **EP 4 046 822 B1**
(45) Date of publication and mention of the grant of the patent: **03.04.2024**
(21) Application number: 22156197.0
(22) Date of filing: 10.02.2022
(51) Int. Cl.: B60C 7/14

(54) **AIRLESS TIRE**
LUFTLOSER REIFEN
PNEU SANS AIR

(30) Priority: 18.02.2021 JP 2021024582
(43) Date of publication of application: 24.08.2022
(73) Proprietor: Sumitomo Rubber Industries, Ltd., Kobe-shi, Hyogo-ken 651-0072 (JP)
(72) Inventor: YAMANE, Masakatsu, Kobe-shi 651-0072 (JP)
(74) Representative: Manitz Finsterwald Patent- und Rechtsanwaltspartnerschaft mbB

(56) References cited:
- CN-U- 212 446 976
- JP-A- 2011 156 906
- JP-A- 2012 006 560
- JP-A- 2017 077 742
- US-A1- 2012 067 481
- US-A1- 2015 273 936
- US-A1- 2016 297 244
- US-A1- 2017 305 195

## Description

### BACKGROUND OF THE INVENTION

### Field of the Invention

The present invention relates to an airless tire that can support a load by its own structure without using high-pressure air.

### Background Art

Conventionally, various airless tires in which a tread ring and a hub are connected by spokes have been known. For example, Japanese Laid-Open Patent Publication No. 2016-130071 proposes an airless tire that suppresses damage to spoke plate portions, of a spoke, formed in an S-shape, by specifying the thicknesses of the spoke plate portions.

JP 2017-077742 A discloses an airless tire according to the preamble of claim 1. The tire has an outer cylindrical body with a tread member, an attachment body attached to an axle and a spoke having a plurality of connecting members. The connecting members have end portions in an axial direction, the end portion extending in a radial direction between the attachment body and the outer cylindrical body.

However, in the airless tire of Japanese Laid-Open Patent Publication No. 2016-130071, when a spoke plate portion becomes damaged by coming into contact with a step or a protrusion on a road surface, the damage may grow due to application of compressive force or tensile force to the spoke plate portion during running, which causes vibration and noise and finally leads to breakage.

The present invention has been made in view of the above circumstances, and a main object of the present invention is to provide an airless tire that, even when a spoke becomes damaged, can suppress growth of the damage to improve durability.

### SUMMARY OF THE INVENTION

The present invention is directed to an airless tire including: a tread ring having a ground-contact surface; a hub disposed inward of the tread ring in a tire radial direction and to be fixed to an axle; and a spoke assembly for connecting the tread ring and the hub, wherein the spoke assembly includes a plurality of spoke plates, each of the spoke plates has a first end portion extending in the tire radial direction on one end side in a tire axial direction, a second end portion extending in the tire radial direction on another end side in the tire axial direction, an inner end portion which is an end portion on the hub side, and an outer end portion which is an end portion on the tread ring side, and the spoke plates include a first spoke plate having a projection projecting to an outer side in the tire axial direction beyond a virtual line linearly connecting a first inner end on the one end side in the tire axial direction of the inner end portion and a first outer end on the one end side in the tire axial direction of the outer end portion. The projection is formed in an arc shape as a result of the first end portion of the first spoke plate being curved outward in the tire axial direction.

In the airless tire according to the present invention, preferably, the first end portion of the first spoke plate has arc-shaped recesses curved inward in the tire axial direction on both sides in the tire radial direction of the projection.

In the airless tire according to the present invention, preferably, a radius of curvature of the projection is larger than a radius of curvature of the recess.

In the airless tire according to the present invention, preferably, the second end portion of the first spoke plate has a straight portion extending in a straight manner in the tire radial direction.

In the airless tire according to the present invention, preferably, the spoke assembly has a designated mounting direction to a vehicle, and the first spoke plate is disposed such that the projection is located on an outer side of the vehicle when the airless tire is mounted to the vehicle.

In the airless tire according to the present invention, preferably, a distance between outermost end portions in the tire axial direction of a pair of the projections adjacent to each other in a tire circumferential direction is smaller than a ground-contact length in the tire circumferential direction when a normal load, which is specified for the tire by the manufacturer, is applied to the tread ring.

In the airless tire according to the present invention, preferably, the projection projects to the outer side in the tire axial direction beyond an outermost end portion in the tire axial direction of the tread ring and an outermost end portion in the tire axial direction of the hub.

In the airless tire according to the present invention, preferably, the spoke plates further include a second spoke plate not having the projection.

In the airless tire according to the present invention, preferably, the spoke plates further include a second spoke plate having a second projection projecting to the outer side in the tire axial direction beyond a second virtual line linearly connecting a second inner end on the other end side in the tire axial direction of the inner end portion and a second outer end on the other end side in the tire axial direction of the outer end portion.

In the airless tire according to the present invention, preferably, in the spoke assembly, the first spoke plates and the second spoke plates are alternately disposed in the tire circumferential direction.

In the airless tire according to the present invention, the spoke plates include a first spoke plate having a projection projecting to the outer side in the tire axial direction beyond a virtual line linearly connecting the first inner end on the one end side in the tire axial direction of the inner end portion and the first outer end on the one end side in the tire axial direction of the outer end portion.

Even when such a spoke plate becomes damaged by coming into contact with a step or a protrusion on a road surface, the projection can become damaged to suppress growth of the damage to the entirety of the spoke plate, thereby preventing the spoke plate from being broken. Therefore, even when the spoke becomes damaged, the airless tire according to the present invention can suppress growth of the damage to improve durability.

### BRIEF DESCRIPTION OF THE DRAWINGS

FIG. 1 is a perspective view showing an embodiment of the airless tire according to the present invention;
FIG. 2 is a side view of the airless tire;
FIG. 3 is a cross-sectional view taken along a line A-A in FIG. 2;
FIG. 4 is a side view of the airless tire in a ground-contact state;
FIG. 5 is a cross-sectional view taken along a line B-B in FIG. 2;
FIG. 6 is an end view of a spoke plate as viewed in the direction of spoke widths; and
FIG. 7 is a cross-sectional view of a spoke of another embodiment as viewed in a tire circumferential direction.

### DETAILED DESCRIPTION

Hereinafter, an embodiment of the present invention will be described in detail with reference to the drawings.

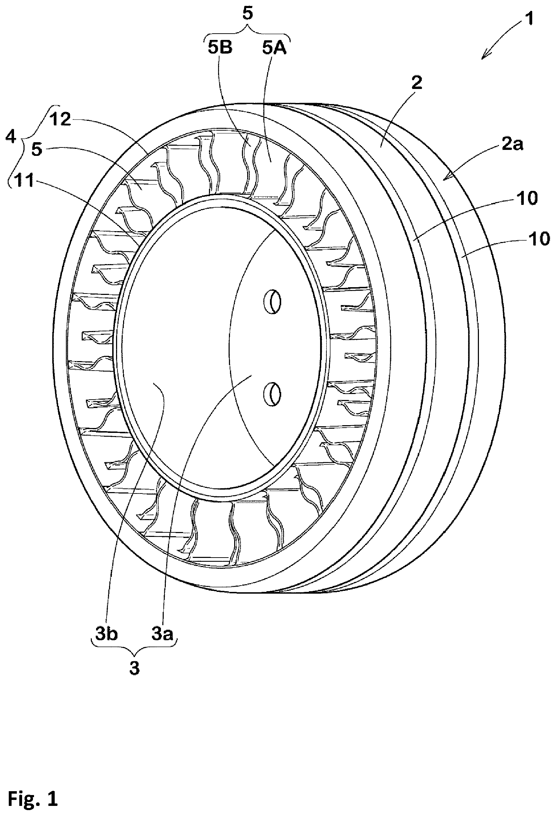

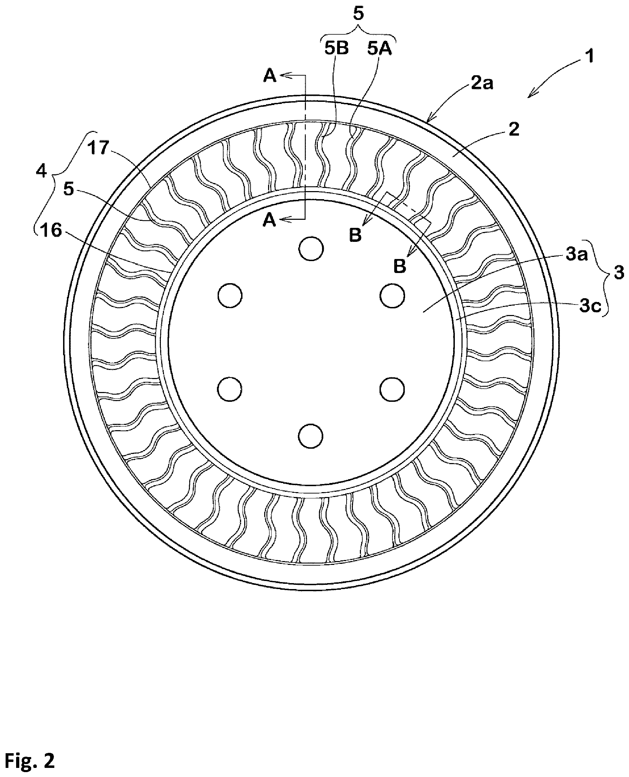

FIG. 1 is a perspective view showing an airless tire 1 according to the present embodiment, and FIG. 2 is a side view of the airless tire 1. As shown in FIG. 1 and FIG. 2, the airless tire 1 according to the present embodiment includes a tread ring 2 having a ground-contact surface 2a, a hub 3 disposed inward of the tread ring 2 in the tire radial direction, and a spoke 4 for connecting the tread ring 2 and the hub 3.

The hub 3 preferably includes a fixed portion 3a which is fixed to an axle (not shown) of a vehicle. Such an airless tire 1 can support a load applied to the tread ring 2, by the hub 3 and the spoke 4 without using high-pressure air. Therefore, the airless tire 1 according to the present embodiment has no risk of a puncture.

The spoke 4 of the present embodiment includes a plurality of spoke plates 5 provided so as to be spaced apart from each other in the tire circumferential direction. Each spoke plate 5 is formed, for example, in a plate shape in which the width in the tire axial direction thereof is larger than the thickness in the tire circumferential direction thereof. In such a spoke 4, when a load is applied to the tread ring 2, tensile force is applied to the spoke plates 5 that are located above the hub 3, and compressive force is applied to the spoke plates 5 that are located below the hub 3, whereby the spoke 4 can support the load.

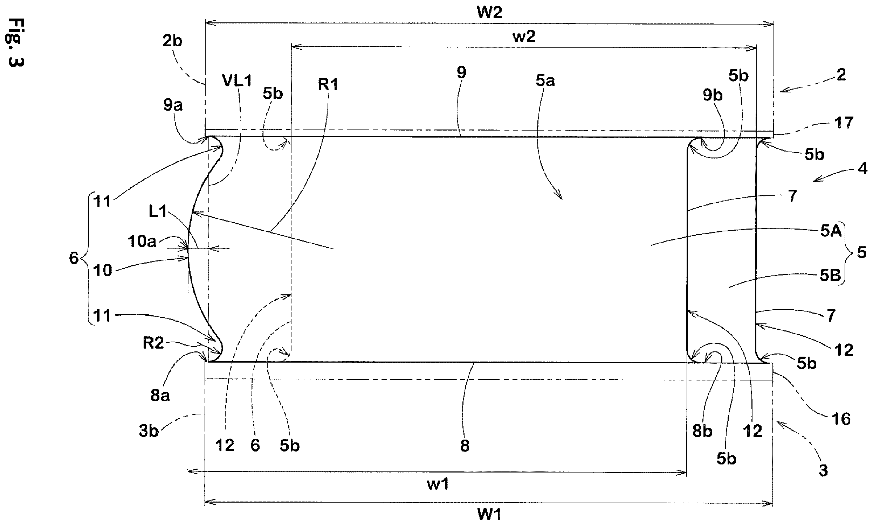

FIG. 3 is a cross-sectional view taken along a line A-A in FIG. 2. As shown in FIG. 3, each spoke plate 5 of the present embodiment has a first end portion 6 which extends in the tire radial direction on one end side in the tire axial direction, and a second end portion 7 which extends in the tire radial direction on the other end side in the tire axial direction. Preferably, each spoke plate 5 of the present embodiment further has an inner end portion 8 which is an end portion on the hub 3 side, and an outer end portion 9 which is an end portion on the tread ring 2 side.

The inner end portion 8 has, for example, a first inner end 8a on the one end side in the tire axial direction, and a second inner end 8b on the other end side in the tire axial direction. The outer end portion 9 has, for example, a first outer end 9a on the one end side in the tire axial direction, and a second outer end 9b on the other end side in the tire axial direction.

The spoke plates 5 of the present embodiment include first spoke plates 5A each having a projection 10 which projects to the outer side in the tire axial direction beyond a virtual line VL1 linearly connecting the first inner end 8a and the first outer end 9a.

Even when such a spoke plate 5 becomes damaged by coming into contact with a step or a protrusion on a road surface, the projection 10 can become damaged to suppress growth of the damage to the entirety of the spoke plate 5, thereby preventing the spoke plate 5 from being broken. Therefore, even when the spoke 4 becomes damaged, the airless tire 1 according to the present embodiment can suppress growth of the damage to improve durability.

As a more preferable mode, the projection 10 is formed in an arc shape as a result of the first end portion 6 of the first spoke plate 5A being curved outward in the tire axial direction. Such a spoke plate 5 can be integrally formed with the projection 10 and serves to reduce the production cost of the airless tire 1.

The projection 10 of the present embodiment is formed in an arc shape having a single radius of curvature R1. In the projection 10, an outermost end portion 10a in the tire axial direction is preferably provided at the center in the tire radial direction of the first spoke plate 5A. Such a projection 10 can protect a wide range in the tire radial direction. The projection 10 is not limited to such a mode, and for example, the outermost end portion 10a may be provided closer to the outer side in the tire radial direction of the first spoke plate 5A.

In the projection 10, a distance L1 between the outermost end portion 10a and the virtual line VL1 is preferably 1 to 10 mm. When the distance L1 is not less than 1 mm, even when the spoke plate 5 becomes damaged by coming into contact with a step or a protrusion on a road surface, the projection 10 can be reliably brought into contact with the step or a protrusion. From such a viewpoint, the distance L1 is more preferably not less than 3 mm.

When the distance L1 is not greater than 10 mm, excessive increase of the size of the projection 10 is suppressed, which serves to reduce the weight of the airless tire 1 and also can reduce air resistance, so that the low fuel consumption performance of the airless tire 1 can be improved.

The first end portion 6 of the first spoke plate 5A preferably has arc-shaped recesses 11 which are curved inward in the tire axial direction on both sides in the tire radial direction of the projection 10. Even when the projection 10 becomes damaged, such a first spoke plate 5A can suppress growth of the damage beyond each recess 11.

The radius of curvature R1 of the projection 10 is preferably larger than a radius of curvature R2 of the recess 11. In such a first spoke plate 5A, the projection 10 can be formed so as to be large in size, so that when the first spoke plate 5A comes into contact with a step or a protrusion on a road surface, the projection 10 can be brought into contact with the step or a protrusion.

The projection 10 preferably projects to the outer side in the tire axial direction beyond an outermost end portion 2b in the tire axial direction of the tread ring 2 and an outermost end portion 3b in the tire axial direction of the hub 3. Such a projection 10 suppresses contact of the tread ring 2 and the hub 3 with a step or a protrusion on a road surface and can further improve the durability of the airless tire 1.

The second end portion 7 of the first spoke plate 5A of the present embodiment has a straight portion 12 which extends in a straight manner in the tire radial direction. Since the projection 10 is not formed on the second end portion 7 side, such a first spoke plate 5A serves to reduce the weight of the airless tire 1 and can improve the low fuel consumption performance of the airless tire 1.

Each first spoke plate 5A of the present embodiment has a spoke width w1 measured along the surface 5a of the first spoke plate 5A from the first end portion 6 to the second end portion 7 at the same position in the tire radial direction. The spoke width w1 of the first spoke plate 5A is preferably smaller than a width W1 of the hub 3 and a width W2 of the tread ring 2. Such a first spoke plate 5A can further reduce the weight of the airless tire 1 and can improve the low fuel consumption performance of the airless tire 1.

The spoke 4 of the present embodiment has a designated mounting direction to a vehicle (not shown). The first spoke plate 5A is preferably disposed such that the projection 10 is located on the outer side of the vehicle when the airless tire 1 is mounted to the vehicle. Such a spoke 4 can protect the outer side of the vehicle which easily comes into contact with a step or a protrusion on a road surface, without providing a large number of projections 10, and can achieve both desired low fuel consumption performance and desired durability of the airless tire 1.

The spoke plates 5 of the present embodiment further include second spoke plates 5B having no projection 10. That is, each second spoke plate 5B of the present embodiment has straight portions 12 at the first end portion 6 and the second end portion 7. Since no projection 10 is formed in such a second spoke plate 5B, the second spoke plate 5B serves to reduce the weight of the airless tire 1 and can improve the low fuel consumption performance of the airless tire 1.

Each second spoke plate 5B of the present embodiment has a spoke width w2 measured along the surface 5a of the second spoke plate 5B from the first end portion 6 to the second end portion 7 at the same position in the tire radial direction. The spoke width w2 of the second spoke plate 5B is preferably smaller than the width W1 of the hub 3 and the width W2 of the tread ring 2.

Since each second spoke plate 5B of the present embodiment has no projection 10, the spoke width w2 of the second spoke plate 5B is smaller than the spoke width w1 of the first spoke plate 5A. Such a second spoke plate 5B can further reduce the weight of the airless tire 1 and can improve the low fuel consumption performance of the airless tire 1.

In the spoke 4, for example, the first spoke plates 5A and the second spoke plates 5B are alternately disposed in the tire circumferential direction. When the airless tire 1 is mounted to the vehicle, in such a spoke 4, the first spoke plates 5A and the second spoke plates 5B can be disposed in a well-balanced manner such that each projection 10 is located on the outer side of the vehicle, and both desired steering stability and desired ride comfort of the airless tire 1 can be achieved.

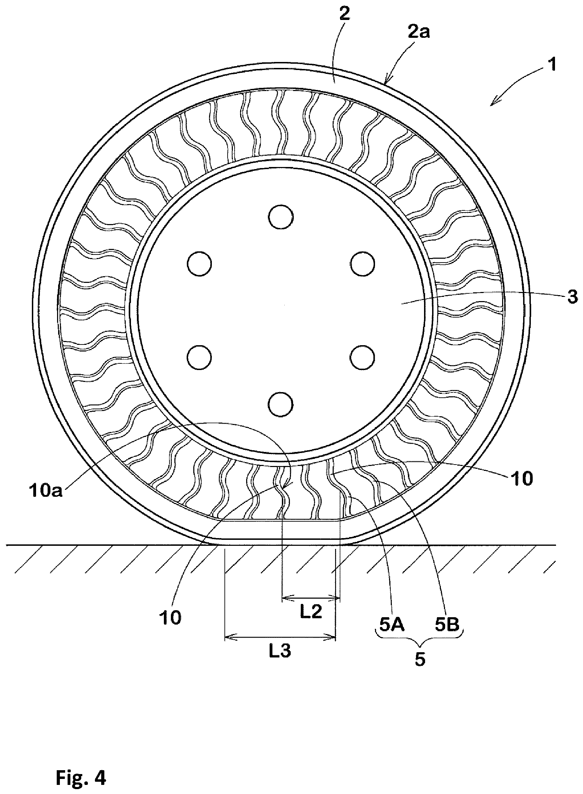

FIG. 4 is a side view of the airless tire 1 in a ground-contact state. As shown in FIG. 4, in the airless tire 1 according to the present embodiment, a distance L2 between the outermost end portions 10a in the tire axial direction of a pair of the projections 10 adjacent to each other in the tire circumferential direction is smaller than a ground-contact length L3 in the tire circumferential direction when a normal load is applied to the tread ring 2. Here, the "normal load" is a load specified for each tire by a manufacturer or the like.

Such an airless tire 1 can more reliably suppress damage to the spoke plates 5 in a ground-contact region which easily come into contact with a step or a protrusion on a road surface. From such a viewpoint, the distance L2 of the projection 10 is preferably not greater than 50% of the ground-contact length L3.

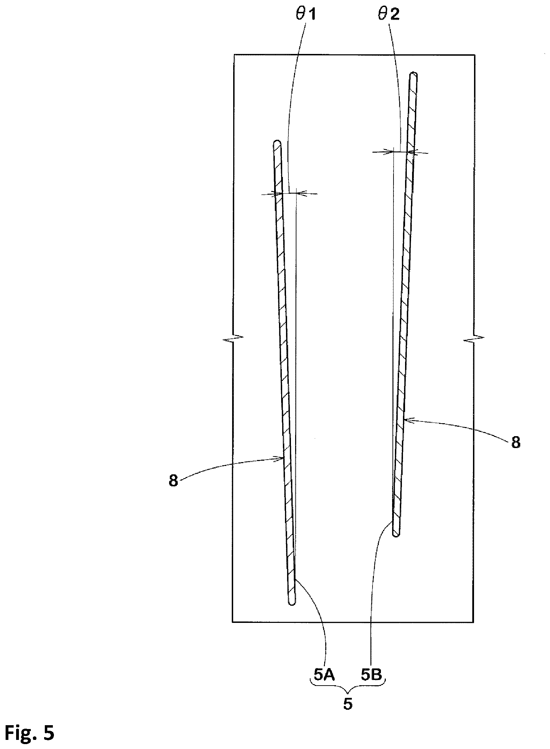

FIG. 5 is a cross-sectional view taken along a line B-B in FIG. 2. As shown in FIG. 5, the inner end portion 8 of each spoke plate 5 of the present embodiment extends so as to be inclined relative to the tire axial direction. In addition, although not shown, the outer end portion 9 of the spoke plate 5 preferably extends so as to be inclined relative to the tire axial direction at the same angle and in the same direction as the inner end portion 8.

Inclination angles of the inner end portion 8 and the outer end portion 9 with respect to the tire axial direction are preferably 2 to 10°. When the inclination angles are not less than 2°, the stiffness in the tire circumferential direction can be improved, and the durability of the airless tire 1 can be improved. When the inclination angles are not greater than 10°, excessive stiffness in the tire circumferential direction can be suppressed, and the ride comfort of the airless tire 1 can be improved.

The inner end portion 8 of each first spoke plate 5A and the inner end portion 8 of each second spoke plate 5B are preferably inclined relative to the tire axial direction in directions opposite to each other. Such a spoke 4 has good balance in the tire axial direction and can improve the ride comfort of the airless tire 1.

An angle θ1 of the inner end portion 8 of each first spoke plate 5A with respect to the tire axial direction and an angle θ2 of the inner end portion 8 of each second spoke plate 5B with respect to the tire axial direction are preferably equal to each other. Such a spoke 4 has good balance in the tire axial direction and can improve the ride comfort of the airless tire 1. The angle θ1 of the inner end portion 8 of each first spoke plate 5A with respect to the tire axial direction and the angle θ2 of the inner end portion 8 of each second spoke plate 5B with respect to the tire axial direction may be, for example, different from each other.

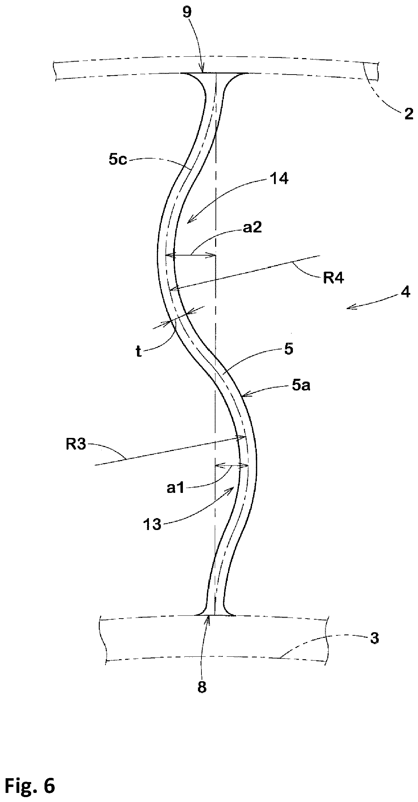

FIG. 6 is an end view of the spoke plate 5 as viewed in the direction of the spoke widths w1 and w2. The end view of each spoke plate 5 of the present embodiment is the same for the first spoke plate 5A and the second spoke plate 5B. As shown in FIG. 3 and FIG. 6, each spoke plate 5 of the present embodiment has a spoke thickness t orthogonal to the spoke widths w1 and w2 and the surface 5a of the spoke plate 5.

Each spoke plate 5 of the present embodiment includes a first curved portion 13 which is curved so as to project to one side in the tire circumferential direction on the hub 3 side, and a second curved portion 14 which is curved so as to project to the other side in the tire circumferential direction on the tread ring 2 side, as viewed in the direction of the spoke widths w1 and w2. Such a spoke plate 5 can improve the ride comfort of the airless tire 1 by the first curved portion 13 and the second curved portion 14.

An amplitude a1 of the first curved portion 13 and an amplitude a2 of the second curved portion 14 of the present embodiment are different from each other. Such a spoke plate 5 can limit the direction of deformation occurring when large compressive force is applied to the spoke plate 5, such as when passing through a step, to the side where a curved portion having a larger amplitude, out of the first curved portion 13 and the second curved portion 14, is present. Accordingly, even when passing through a step, the spoke 4 can suppress contact between the spoke plates 5 adjacent to each other in the tire circumferential direction due to deformation.

The amplitude a2 of the second curved portion 14 is preferably larger than the amplitude a1 of the first curved portion 13. The amplitude a2 of the second curved portion 14 of the present embodiment is larger than the amplitude a1 of the first curved portion 13 by 1 to 3 mm. Such a spoke plate 5 has a good vibration absorbing effect by increasing the deformation of the second curved portion 14 which is located on the outer side in the tire radial direction, and can improve the ride comfort of the airless tire 1.

The amplitude a1 of the first curved portion 13 of the present embodiment is uniform in the entire range of the spoke width w. In addition, the amplitude a2 of the second curved portion 14 of the present embodiment is uniform in the entire range of the spoke width w. Such a spoke plate 5 can distribute strain occurring when compressive force is applied thereto, in the direction of the spoke width w, and can further improve the durability of the airless tire 1.

A radius of curvature R3 of the first curved portion 13 and a radius of curvature R4 of the second curved portion 14 are preferably equal to each other. Such a spoke plate 5 can limit the direction of deformation occurring when compressive force is applied thereto, to the direction based on amplitude. In addition, the spoke plate 5 can distribute strain occurring when compressive force is applied thereto, to the first curved portion 13 and the second curved portion 14, and can further improve the durability of the airless tire 1. Here, the radius of curvature R3 of the first curved portion 13 and the radius of curvature R4 of the second curved portion 14 are each a radius of curvature of a center line 5c of the spoke thickness t.

The center line 5c of the spoke thickness t in the inner end portion 8 of the present embodiment extends so as to be parallel to the tire radial direction. The center line 5c of the spoke thickness t in the outer end portion 9 of the present embodiment also extends so as to be parallel to the tire radial direction, similar to that in the inner end portion 8. Such a spoke plate 5 can reduce strain occurring when tensile force is applied thereto, and can further improve the durability of the airless tire 1.

The center line 5c of the spoke thickness t in the inner end portion 8 and the center line 5c of the spoke thickness t in the outer end portion 9 are preferably located on the same straight line as viewed in the direction of the spoke width w. Such a spoke plate 5 can limit the direction of deformation occurring when compressive force is applied thereto, to the direction based on amplitude. In addition, such a spoke plate 5 can reduce strain occurring when compressive force is applied thereto, and can further improve the durability of the airless tire 1.

As shown in FIG. 1 and FIG. 2, the tread ring 2 is formed of, for example, an elastic body such as rubber in a cylindrical shape. The tread ring 2 preferably has a plurality of grooves 15 formed on the ground-contact surface 2a which comes into contact with a road surface during running. The ground-contact surface 2a is not limited to such a mode, and, for example, the ground-contact surface 2a may have a block shape, or a plurality of recesses may be formed thereon.

The hub 3 is formed of, for example, an inelastic body such as metal. The hub 3 preferably includes the disk-shaped fixed portion 3a which is fixed to an axle, and a cylindrical portion 3c which is connected to the spoke 4. The fixed portion 3a of the hub 3 has, for example, a plurality of fixing holes formed therein. The fixed portion 3a of the hub 3 is not limited to such a mode, and may be, for example, attachable to a dedicated axle through one-touch operation.

The spoke 4 is formed from, for example, a polymer material having elasticity. The polymer material is preferably selected from a single elastomer, a composite elastomer containing two or more elastomers, and a fiber-containing elastomer. Such a spoke 4 has excellent balance between weight reduction, flexibility, and strength, and serves to improve the low fuel consumption performance, the ride comfort, and the durability of the airless tire 1 in a well-balanced manner.

The spoke 4 of the present embodiment includes the plurality of spoke plates 5, an inner cylindrical portion 16 which is connected to the hub 3, and an outer cylindrical portion 17 which is connected to the tread ring 2. Accordingly, each spoke plate 5 is indirectly connected to the tread ring 2 and the hub 3.

Such a spoke 4 can be firmly connected to the hub 3 and the tread ring 2 and can improve the durability of the airless tire 1. In the spoke 4, for example, the inner cylindrical portion 16 and the outer cylindrical portion 17 may be omitted, and each spoke plate 5 may be directly connected to the tread ring 2 and the hub 3.

As shown in FIG. 3, in each straight portion 12 of the spoke plate 5, for example, the inner end portion 8 is integrally formed with the inner cylindrical portion 16 via curved surface portions 5b. In addition, in the spoke plate 5, for example, the outer end portion 9 is integrally formed with the outer cylindrical portion 17 via curved surface portions 5b.

In the case where the inner cylindrical portion 16 and the outer cylindrical portion 17 are omitted, in each spoke plate 5, the inner end portion 8 and the outer end portion 9 are preferably connected to the tread ring 2 and the hub 3 via the curved surface portions 5b, respectively. Such curved surface portions 5b can reduce strain occurring in the inner end portion 8 and the outer end portion 9, and can further improve the durability of the airless tire 1.

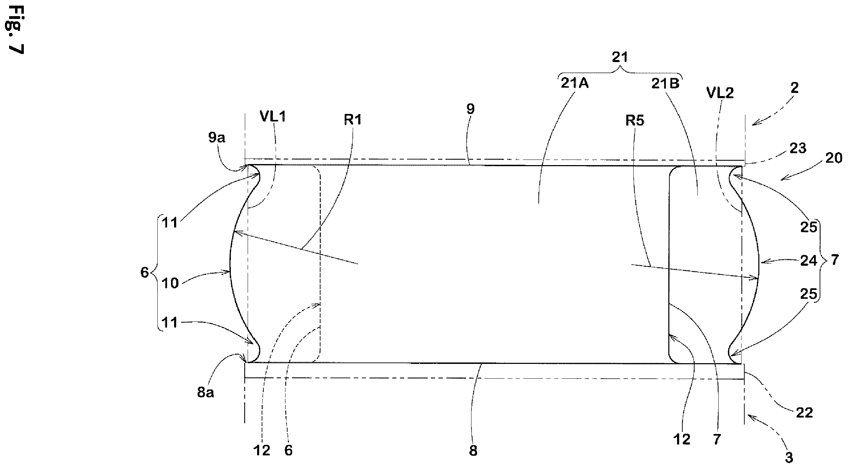

FIG. 7 is a cross-sectional view of a spoke 20 of another embodiment as viewed in the tire circumferential direction. Components that are the same as those of the above-described embodiment are designated by the same reference characters, and the description thereof is omitted. Similar to the above-described spoke 4, the spoke 20 of this embodiment includes a plurality of spoke plates 21, an inner cylindrical portion 22 which is connected to the hub 3, and an outer cylindrical portion 23 which is connected to the tread ring 2.

As shown in FIG. 7, the spoke plates 21 of this embodiment include a first spoke plate 21A and a second spoke plate 21B. Similar to the above-described first spoke plates 5A, the first spoke plate 21A has a first end portion 6 which extends in the tire radial direction on one end side in the tire axial direction, and a second end portion 7 which extends in the tire radial direction on the other end side in the tire axial direction. Preferably, each spoke plate 21 of this embodiment further has an inner end portion 8 which is an end portion on the hub 3 side, and an outer end portion 9 which is an end portion on the tread ring 2 side.

Similar to the above-described first spoke plates 5A, the first spoke plate 21A of this embodiment has a projection 10 which projects to the outer side in the tire axial direction beyond a virtual line VL1 linearly connecting the first inner end 8a of the inner end portion 8 and the first outer end 9a of the outer end portion 9.

Even when such a first spoke plate 21A becomes damaged by coming into contact with a step or a protrusion on a road surface, the projection 10 can become damaged to suppress growth of the damage to the entirety of the first spoke plate 21A, thereby preventing the spoke plate 21 from being broken.

Similar to the above-described first spoke plates 5A, the first end portion 6 of the first spoke plate 21A preferably has arc-shaped recesses 11 which are curved inward in the tire axial direction on both sides in the tire radial direction of the projection 10. Even when the projection 10 becomes damaged, such a first spoke plate 21A can suppress growth of the damage beyond each recess 11.

Similar to the above-described first spoke plates 5A, the second end portion 7 of the first spoke plate 21A of this embodiment has a straight portion 12 which extends in a straight manner in the tire radial direction. Since the projection 10 is not formed on the second end portion 7 side, such a first spoke plate 21A serves to reduce the weight of the airless tire 1 and can improve the low fuel consumption performance of the airless tire 1.

The second spoke plate 21B of this embodiment has a second projection 24 which projects to the outer side in the tire axial direction beyond a second virtual line VL2 linearly connecting the second inner end 8b on the other end side in the tire axial direction of the inner end portion 8 and the second outer end 9b on the other end side in the tire axial direction of the outer end portion 9.

Even when such a second spoke plate 21B becomes damaged by coming into contact with a step or a protrusion on a road surface, the second projection 24 can become damaged to suppress growth of the damage to the entirety of the second spoke plate 21B, thereby preventing the spoke plate 21 from being broken.

The second projection 24 is formed in an arc shape as a result of the second end portion 7 of the second spoke plate 21B being curved outward in the tire axial direction. Such a second spoke plate 21B can be integrally formed with the second projection 24 and serves to reduce the production cost of the airless tire 1.

The second projection 24 of the present embodiment is formed in an arc shape having a single radius of curvature R5. The radius of curvature R5 of the second projection 24 is preferably equal to the radius of curvature R1 of the projection 10. Such a second projection 24 can protect a wide range in the tire radial direction.

The second end portion 7 of the second spoke plate 21B preferably has arc-shaped second recesses 25 which are curved inward in the tire axial direction on both sides in the tire radial direction of the second projection 24. Even when the second projection 24 becomes damaged, such a second spoke plate 21B can suppress growth of the damage beyond each second recess 25.

Similar to the above-described second spoke plates 5B, the first end portion 6 of the second spoke plate 21B of this embodiment has a straight portion 12 which extends in a straight manner in the tire radial direction. Since the second projection 24 is not formed on the first end portion 6 side, such a second spoke plate 21B serves to reduce the weight of the airless tire 1 and can improve the low fuel consumption performance of the airless tire 1.

Similar to the above-described spoke 4, in the spoke 20 of this embodiment, the first spoke plates 21A and the second spoke plates 21B are alternately disposed in the tire circumferential direction. Such a spoke 20 has good weight balance in the tire axial direction and can improve the steering stability of the airless tire 1.

Although the particularly preferred embodiments of the present invention have been described in detail above, the present invention is not limited to the above-described embodiments, and various modifications can be made to implement the present invention.

### EXAMPLES

Airless tires having the basic structure in FIG. 1 to FIG. 6 were produced as test tires on the basis of specifications in Table 1, and were tested for durability and low fuel consumption performance. The main common specifications and the test method are as follows.

### <Common Specifications>

Tread ring width: 165 mm
Tread ring outer diameter: 502 mm
Tread ring inner diameter: 489 mm
Hub outer diameter: 304 mm
Number of spoke plates: 20 pairs
Inclination angle of each spoke plate end portion: 2°

### <Durability>

Test tires were mounted to a test vehicle, the test vehicle was caused to run on a road surface provided with protrusions described in Table 1, and it was confirmed whether or not the spoke plates were damaged. Using a drum tester, each airless tire in which damage had occurred was caused to run under the conditions of a load of 3.8 kN and a speed of 60 km/h. After 24 hours, the length by which the damage of the spoke plate grew to the inner side in the tire axial direction beyond the virtual line was measured. The results are indexes with the result of a comparative example being regarded as 100 and with the case of no growth to the inner side in the tire axial direction beyond the virtual line being regarded as 50. A lower value indicates that the growth of damage is smaller and that the durability is better.

### <Low Fuel Consumption Performance>

The weight of each test tire was measured. The results are indexes with the result of the comparative example being regarded as 100. A lower value indicates that the weight is smaller and that the low fuel consumption performance is better.

The results of the tests are shown in Table 1.

**[Table 1]**

| | Comp. Ex. | Ex. 1 | Ex. 2 | Ex. 3 | Ex. 4 | Ex. 5 |
|---|---|---|---|---|---|---|
| Sizes of protrusions on road surface (cm) | 5 | 5 | 5 | 10 | 10 | 10 |
| Distance L1 between outermost end portion and virtual line (mm) | 0 | 1 | 3 | 3 | 5 | 10 |
| Durability (index) | 100 | 90 | 70 | 70 | 60 | 50 |
| Low fuel consumption performance (index) | 100 | 101 | 102 | 102 | 103 | 105 |

As a result of the tests, it is confirmed that the airless tire of each Example has less growth of damage and has improved durability as compared to the comparative example. In addition, it is confirmed that the airless tire of each Example has a limited increase in weight and has better combined performance evaluated as the sum of durability and low fuel consumption performance, as compared to the comparative example.

## Claims

1. An airless tire (1) comprising:
a tread ring (2) having a ground-contact surface (2a);
a hub (3) disposed inward of the tread ring (2) in a tire radial direction and to be fixed to an axle; and
a spoke assembly (4, 20) for connecting the tread ring (2) and the hub (3), wherein
the spoke assembly (4, 20) includes a plurality of spoke plates (5, 21),
each of the spoke plates (5, 21) has a first end portion (6) extending in the tire radial direction on one end side in a tire axial direction, a second end portion (7) extending in the tire radial direction on another end side in the tire axial direction, an inner end portion (8) which is an end portion on the hub (3) side, and an outer end portion (9) which is an end portion on the tread ring (2) side, and
the spoke plates (5, 21) include a first spoke plate (5A, 21A) having a projection (10) projecting to an outer side in the tire axial direction beyond a virtual line (VL1) linearly connecting a first inner end (8a) on the one end side in the tire axial direction of the inner end portion (8) and a first outer end (9a) on the one end side in the tire axial direction of the outer end portion (9),
**characterized in that** the projection (10) is formed in an arc shape as a result of the first end portion (6) of the first spoke plate (5A, 21A) being curved outward in the tire axial direction.

2. The airless tire (1) according to claim 1, wherein the first end portion (6) of the first spoke plate (5A, 21A) has arc-shaped recesses (11) curved inward in the tire axial direction on both sides in the tire radial direction of the projection (10).

3. The airless tire (1) according to claim 2, wherein a radius of curvature (R1) of the projection (10) is larger than a radius of curvature (R2) of the recess (11).

4. The airless tire (1) according to any one of claims 1 to 3, wherein the second end portion (7) of the first spoke plate (5A, 21A) has a straight portion (12) extending in a straight manner in the tire radial direction.

5. The airless tire (1) according to any one of claims 1 to 4, wherein
the spoke assembly (4, 20) has a designated mounting direction to a vehicle, and
the first spoke plate (5A, 21A) is disposed such that the projection (10) is located on an outer side of the vehicle when the airless tire (1) is mounted to the vehicle.

6. The airless tire (1) according to any one of claims 1 to 5, wherein a distance (L2) between outermost end portions (10a) in the tire axial direction of a pair of the projections (10) adjacent to each other in a tire circumferential direction is smaller than a ground-contact length (L3) in the tire circumferential direction when a normal load, which is specified for the tire by the manufacturer, is applied to the tread ring (2).

7. The airless tire (1) according to any one of claims 1 to 6, wherein the projection (10) projects to the outer side in the tire axial direction beyond an outermost end portion (2b) in the tire axial direction of the tread ring (2) and an outermost end portion (3b) in the tire axial direction of the hub (3).

8. The airless tire (1) according to any one of claims 1 to 7, wherein the spoke plates (5) further include a second spoke plate (5B) not having the projection (10).

9. The airless tire (1) according to any one of claims 1 to 7, wherein the spoke plates (21) further include a second spoke plate (21B) having a second projection (24) projecting to the outer side in the tire axial direction beyond a second virtual line (VL2) linearly connecting a second inner end (8b) on the other end side in the tire axial direction of the inner end portion (8) and a second outer end (9b) on the other end side in the tire axial direction of the outer end portion (9).

10. The airless tire (1) according to claim 8 or 9, wherein, in the spoke assembly (4, 20), the first spoke plates (5A, 21A) and the second spoke plates (5B, 21B) are alternately disposed in the tire circumferential direction.

## Patentansprüche

1. Luftloser Reifen (1), umfassend:
einen Laufflächenring (2) mit einer Bodenkontaktfläche (2a);
eine Nabe (3), die in einer Reifenradialrichtung innen von dem Laufflächenring (2) angeordnet ist und an einer Achse zu befestigen ist; und
eine Speichenanordnung (4, 20) zum Verbinden des Laufflächenrings (2) und der Nabe (3), wobei
die Speichenanordnung (4, 20) eine Vielzahl von Speichenplatten (5, 21) umfasst,
jede der Speichenplatten (5, 21) einen ersten Endabschnitt (6), der sich in der Reifenradialrichtung auf einer Endseite in einer Reifenaxialrichtung erstreckt, einen zweiten Endabschnitt (7), der sich in der Reifenradialrichtung auf einer anderen Endseite in der Reifenaxialrichtung erstreckt, einen inneren Endabschnitt (8), der ein Endabschnitt auf der Seite der Nabe (3) ist, und einen äußeren Endabschnitt (9), der ein Endabschnitt auf der Seite des Laufflächenrings (2) ist, aufweist, und
die Speichenplatten (5, 21) eine erste Speichenplatte (5A, 21A) mit einem Vorsprung (10) umfassen, der zu einer Außenseite in der Reifenaxialrichtung über eine virtuelle Linie (VL1) hinaus vorsteht, die ein erstes inneres Ende (8a) auf der einen Endseite in der Reifenaxialrichtung des inneren Endabschnitts (8) und ein erstes äußeres Ende (9a) auf der einen Endseite in der Reifenaxialrichtung des äußeren Endabschnitts (9) linear verbindet,
**dadurch gekennzeichnet, dass** der Vorsprung (10) infolge dessen, dass der erste Endabschnitt (6) der ersten Speichenplatte (5A, 21A) in der Reifenaxialrichtung nach außen gekrümmt ist, in einer Bogenform ausgebildet ist.

2. Luftloser Reifen (1) nach Anspruch 1, wobei der erste Endabschnitt (6) der ersten Speichenplatte (5A, 21A) bogenförmige Aussparungen (11) aufweist, die in der Reifenaxialrichtung auf beiden Seiten in der Reifenradialrichtung des Vorsprungs (10) nach innen gekrümmt sind.

3. Luftloser Reifen (1) nach Anspruch 2, wobei ein Krümmungsradius (R1) des Vorsprungs (10) größer als ein Krümmungsradius (R2) der Aussparung (11) ist.

4. Luftloser Reifen (1) nach einem der Ansprüche 1 bis 3, wobei der zweite Endabschnitt (7) der ersten Speichenplatte (5A, 21A) einen geraden Abschnitt (12) aufweist, der sich in der Reifenradialrichtung gerade erstreckt.

5. Luftloser Reifen (1) nach einem der Ansprüche 1 bis 4, wobei
die Speichenanordnung (4, 20) eine vorgesehene Montagerichtung an einem Fahrzeug aufweist, und
die erste Speichenplatte (5A, 21A) so angeordnet ist, dass sich der Vorsprung (10) an einer Außenseite des Fahrzeugs befindet, wenn der luftlose Reifen (1) an dem Fahrzeug montiert ist.

6. Luftloser Reifen (1) nach einem der Ansprüche 1 bis 5, wobei ein Abstand (L2) zwischen äußersten Endabschnitten (10a) in der Reifenaxialrichtung eines Paars der Vorsprünge (10), die in einer Reifenumfangsrichtung zueinander benachbart sind, kleiner als eine Bodenkontaktlänge (L3) in der Reifenumfangsrichtung ist, wenn eine Normallast, die vom Hersteller für den Reifen vorgegeben ist, auf den Laufflächenring (2) aufgebracht wird.

7. Luftloser Reifen (1) nach einem der Ansprüche 1 bis 6, wobei der Vorsprung (10) zu der Außenseite in der Reifenaxialrichtung über einen äußersten Endabschnitt (2b) in der Reifenaxialrichtung des Laufflächenrings (2) und einen äußersten Endabschnitt (3b) in der Reifenaxialrichtung der Nabe (3) hinaus vorsteht.

8. Luftloser Reifen (1) nach einem der Ansprüche 1 bis 7, wobei die Speichenplatten (5) ferner eine zweite Speichenplatte (5B) umfassen, die den Vorsprung (10) nicht aufweist.

9. Luftloser Reifen (1) nach einem der Ansprüche 1 bis 7, wobei die Speichenplatten (21) ferner eine zweite Speichenplatte (21B) mit einem zweiten Vorsprung (24) umfassen, der zu der Außenseite in der Reifenaxialrichtung über eine zweite virtuelle Linie (VL2) hinaus vorsteht, die ein zweites inneres Ende (8b) auf der anderen Endseite in der Reifenaxialrichtung des inneren Endabschnitts (8) und ein zweites äußeres Ende (9b) auf der anderen Endseite in der Reifenaxialrichtung des äußeren Endabschnitts (9) linear verbindet.

10. Luftloser Reifen (1) nach Anspruch 8 oder 9, wobei in der Speichenanordnung (4, 20) die ersten Speichenplatten (5A, 21A) und die zweiten Speichenplatten (5B, 21B) in der Reifenumfangsrichtung abwechselnd angeordnet sind.

## Revendications

1. Bandage sans air (1) comprenant :
un anneau de bande de roulement (2) ayant une surface de contact au sol (2a) ;
un moyeu (3) disposé à l'intérieur de l'anneau de bande de roulement (2) dans une direction radiale et pour être fixé à un axe ; et
un assemblage de rayons (4, 20) pour connecter l'anneau de bande de roulement (2) et le moyeu (3), dans lequel
l'assemblage de rayons (4, 20) inclut une pluralité de plaques formant rayons (5, 21),
chacune des plaques formant rayons (5, 21) a une première portion d'extrémité (6) s'étendant dans la direction radiale du pneumatique sur un côté d'extrémité dans une direction axiale du pneumatique, une seconde portion d'extrémité (7) s'étendant dans la direction radiale du pneumatique sur un autre côté d'extrémité dans la direction axiale du pneumatique, une portion d'extrémité intérieure (8) qui est une portion d'extrémité sur le côté du moyeu (3), et une portion d'extrémité extérieure (9) qui est une portion d'extrémité sur le côté de l'anneau de bande de roulement (2), et
les plaques formant rayons (5, 21) incluent une première plaque formant rayon (5A, 21A) ayant une projection (10) se projetant vers un côté extérieur dans la direction axiale du pneumatique au-delà d'une ligne virtuelle (VL1) connectant linéairement une première extrémité intérieure (8a) sur ledit un côté d'extrémité dans la direction axiale du pneumatique de la portion d'extrémité intérieure (8) et une première extrémité extérieure (9a) sur ledit un côté d'extrémité dans la direction axiale du pneumatique de la portion d'extrémité extérieure (9),
**caractérisé en ce que** la projection (10) est réalisée dans une forme d'arc comme résultat de la première portion d'extrémité (6) et de la première plaque formant rayon (5A, 21A) qui sont incurvées vers l'extérieur dans la direction axiale du pneumatique.

2. Bandage sans air (1) selon la revendication 1, dans lequel la première portion d'extrémité (6) de la première plaque formant rayon (5A, 21A) a des évidements en forme d'arc (11) incurvés vers l'intérieur dans la direction axiale du pneumatique sur les deux côtés dans la direction radiale du pneumatique de la projection (10).

3. Bandage sans air (1) selon la revendication 2, dans lequel un rayon de courbure (R1) de la projection (10) est plus grand qu'un rayon de courbure (R2) de l'évidement (11).

4. Bandage sans air (1) selon l'une quelconque des revendications 1 à 3, dans lequel la seconde portion d'extrémité (7) de la première plaque formant rayon (5A, 21A) a une portion rectiligne (12) s'étendant d'une manière rectiligne dans la direction radiale du pneumatique.

5. Bandage sans air (1) selon l'une quelconque des revendications 1 à 4, dans lequel
l'assemblage de rayons (4, 20) a une direction de montage par conception sur un véhicule, et
la première plaque formant rayon (5A, 21A) est disposée de telle sorte que la projection (10) est située sur un côté extérieur du véhicule quand le bandage sans air (1) est monté sur le véhicule.

6. Bandage sans air (1) selon l'une quelconque des revendications 1 à 5, dans lequel une distance (L2) entre des portions d'extrémité les plus à l'extérieur (10a) dans la direction axiale du pneumatique d'une paire de projections (10) adjacentes l'une à l'autre dans une direction circonférentielle du pneumatique est plus petite qu'une longueur de contact au sol (L3) dans la direction circonférentielle du pneumatique quand une charge normale, qui est spécifiée pour le pneumatique par le fabricant, est appliqué à l'anneau de bande de roulement (2).

7. Bandage sans air (1) selon l'une quelconque des revendications 1 à 6, dans lequel la projection (10) se projette vers le côté extérieur dans la direction axiale du pneumatique au-delà d'une portion d'extrémité la plus à l'extérieur (2b) dans la direction axiale du pneumatique de l'anneau de bande de roulement (2) et une portion d'extrémité la plus à l'extérieur (3b) dans la direction axiale du pneumatique du moyeu (3).

8. Bandage sans air (1) selon l'une quelconque des revendications 1 à 7, dans lequel les plaques formant rayons (5) inclut en outre une seconde plaque formant rayon (5B) qui ne présente pas la projection (10).

9. Bandage sans air (1) selon l'une quelconque des revendications 1 à 7, dans lequel les plaques formant rayons (21) inclut en outre une seconde plaque formant rayon (21B) ayant une seconde projection (24) qui se projette vers le côté extérieur dans la direction axiale du pneumatique au-delà d'une seconde ligne virtuelle (VL2) connectant linéairement une seconde extrémité intérieure (8b) sur l'autre côté d'extrémité dans la direction axiale du pneumatique de la portion d'extrémité intérieure (8) et une seconde extrémité extérieure (9b) sur l'autre côté d'extrémité dans la direction axiale du pneumatique de la portion d'extrémité extérieure (9).

10. Bandage sans air (1) selon la revendication 8 ou 9, dans lequel, dans l'assemblage de rayons (4, 20), les premières plaques formant rayons (5A, 21A) et les secondes plaques formant rayons (5B, 21B) sont disposées en alternance dans la direction circonférentielle du pneumatique.
